# EUROPÄISCHE PATENTSCHRIFT

(11) **EP 2 699 394 B1**
(45) Veröffentlichungstag und Bekanntmachung des Hinweises auf die Patenterteilung: **23.09.2015**
(21) Anmeldenummer: 12716381.4
(22) Anmeldetag: 19.04.2012
(51) Int. Cl.: B27B 33/14, B27B 17/02, B23D 57/02

(54) **SÄGEKETTE, TRENNVORRICHTUNG MIT SÄGEKETTE UND DEREN VERWENDUNG**
SAW CHAIN, CUTTING DEVICE HAVING A SAW CHAIN, AND USE THEREOF
CHAÎNE DE SCIE, DISPOSITIF DE SÉPARATION DOTÉ D'UNE CHAÎNE DE SCIE ET LEUR UTILISATION

(30) Priorität: 19.04.2011 AT 2282011
(43) Veröffentlichungstag der Anmeldung: 26.02.2014
(73) Patentinhaber: Prinz GmbH & Co. KG, 3382 Loosdorf (AT)
(72) Erfinder: FREITHOFNIGG, Ingo, A-3382 Loosdorf (AT)
(74) Vertreter: Grabherr, Claudia
(86) Internationale Anmeldenummer: PCT/EP2012/057121
(87) Internationale Veröffentlichungsnummer: WO 2012/143419

(56) Entgegenhaltungen:
- EP-A1- 0 439 085

## Beschreibung

Die Erfindung betrifft eine Sägekette gemäß dem Oberbegriff des Anspruchs 1 für eine Trennvorrichtung zum Trennen von Kunststoffprodukten, eine Trennvorrichtung mit einer solchen Sägekette und die Verwendung einer solchen Trennvorrichtung. Die Sägekette und die Trennvorrichtung sind insbesondere für Extrusionsprodukte aus Polyolefinen, noch spezieller für Großrohre, Vollstäbe und Profile ab einem Durchmesser von 300 mm geeignet.

Eine solche Sägekette ist der EP 0 439 085 A1 zu entnehmen.

Die Sägekette und die Trennvorrichtung sind sowohl für das Trennen der Kunststoffprodukte in der Extrusionslinie, wie auch für das Trennen einzelner Produktabschnitte, gesamter Produktstapel oder Anfahr- bzw. Ausschussstücken geeignet.

Das Trennen von Kunststoffprodukten, insbesondere in Extrusionsanlagen erfolgt für relativ dünne Produkte, wie Folien häufig durch Messer. Hier ist die Dicke meist auf ungefähr einen Millimeter beschränkt. Bei Rohren, Vollstäben und Profilen wird meist ein Kreissägeblatt verwendet, welches das Extrudat ablängt.

Speziell bei größeren Extrusionsprodukten, wo das Extrudat einen Durchmesser größer etwa 300 mm erreicht, ist die Verwendung von Kreissägen nur mehr bedingt möglich, da der Sägeblattdurchmesser größer als der doppelte Extrudatdurchmesser sein muss, um ein derartiges Produkt zu trennen.

Die Möglichkeit Kreissägeblätter, die zusätzlich am Umfang geführt werden ist hier bekannt, jedoch sind diese Trennvorrichtungen entsprechend aufwendig konstruiert und daher mit hohen Kosten verbunden.

Meist werden große Extrudate, welclie meist Rohre, Profile oder Vollstäbe darstellen dann durch Bandsägen geschnitten. Bei Bandsägen ist jedoch durch die lange freie Führungslänge des Sägebandes mit einem Abweichen der Schnittlinie von der idealen Schnittlinie zu rechnen, was dazu führt, dass Produkte in der Praxis meist mit Handmaschinen nachbearbeitet werden müssen, damit diese weiter verarbeitet, beispielsweise verschweißt werden können, denn zum Verschweißen von abgelängten Produkten sind zwei plane, saubere Oberflächen auf den Schnittkanten notwendig.

Somit wäre es wünschenswert die Produkte mit einer Kettensäge, deren Führungsschiene nur etwas länger als der Durchmesser sein muss in einem Schnitt zu durchtrennen.

Kettensägen mit entsprechender Kettenführung sind aus dem Stand der Technik hinreichend bekannt und werden hauptsächlich zur Bearbeitung von Holz herangezogen. Somit wurde Kettensägen auf die Bearbeitung von Holz, um hier hohe Schnittgeschwindigkeiten und saubere Schnitte zu erhalten optimiert. Die Verarbeitung von Küriststoffprodukten ist jedoch durch die von Holz unterschiedlichen Eigenschaften von Kunststoffen, speziell von Polyolefinen mit derartigen Kettensägen nicht möglich.

Bei herkömmlichen Kettensägen liegt der Nachteil vor, dass handelsübliche Produkte zu aggressiv in das Material schneiden und die Sägekette schlagartig blockiert. Es kann so zum Reißen derselben führen. Außerdem kann es zur Fadenbildung, zum Einziehen dieser Fäden in die Antriebs- und die Umlenkrolle und damit zum Stillstand der Säge, oder zumindest zur raschen Abnahme der Schnittgeschwindigkeit kommen. Dieser Effekt wird teilweise sogar bewußt ausgenutzt, zum Beispiel bei Schutzkleidung für Waldarbeiten, wo ja Kettensägen bevorzugt eingesetzt werden.

So ist beispielsweise in der DE202006002578U1 geschildert, dass die Eigenschaft Fäden zu ziehen bewusst verstärkt wird, um die Säge bei einer Berührung mit Kunststoff, (in diesem Fall Schutzkleidung) sofort zum Stillstand zu bringen.

Ein weiterer Nachteil bei Fadenbildung ist, dass diese nicht nur die Sägekette und die Antriebs-, bzw. Umlenkrollen verstopfen, sondern auch an der Schnittkante wieder mit dem Kunststoffprodukt verschweißen und somit eine unschöne Schnittfläche erzeugen, die auch wieder nachbearbeitet werden muss.

Abhilfe mittels Kühlmittel wurden auch bereits versucht, wobei sich hier der Nachteil ergibt, dass sich Kühlmittelreste an der Schnittkante teilweise ablagern und eine nachträgliche Weiterverarbeitung, beispielsweise einen nötigen Schweißvorgang beeinträchtigen.

Eine Sägekette für eine Trennvorrichtung zum Trennen von Kunststoffprodukten mit Schneidern, die jeweils einen Schneidengrund aufweisen, der an seinem nachlaufenden Ende ein Schneidenelement trägt, ist aus der EP 439 085 A1 bekannt. Bei ihr zeigen sich jedoch zum Teil die oben genannten Probleme.

Aufgabe der Erfindung ist es daher eine Sägekette und eine Trennvorrichtung (Sägekette und die Kettenführungsschiene (auch als Schwert bezeichnet)) derart zu modifizieren, dass Kunststoffprodukte, bevorzugt solche aus Polyolefinen und insbesondere Kunststoffrohre, Vollstäbe, Plattenstapel oder Profile aus Polyethylen hoher Dichte (HDPE) oder Polypropylen (PP) mit einem Durchmesser größer 300 mm vorzugsweise ohne zusätzliche Kühlung mit einem sauberen Schnitt getrennt werden können.

Eine derartige Sägekette ist im Anspruch 1 beschrieben. Eine erfindungsgemäße Trennvorrichtung ist in Anspruch 10 beschrieben. Weitere bevorzugte Ausführungsformen sind in den abhängigen Unteransprüchen ausgeführt. Erfindungsgemäße Verwendungen sind in den Ansprüchen 13, 14 und 16 beschrieben.

Die Verbesserung der Sägekette, wie auch der Kettenführungsschiene und die Verwendung wird anhand der beiliegenden Zeichnungen nachfolgend genauer beschrieben.
Fig. 1 zeigt die perspektivische Ansicht einer erfindungsgemäßen Sägekette mit Hobelzähnen.
In Fig. 2 ist die Sägekette der Fig.1 in einer Seitenansicht dargestellt.
In Fig. 3 ist die Sägekette der Fig.1 in der Ansicht von oben dargestellt.
Fig. 4 zeigt die perspektivische Ansicht einer erfindungsgemäßen Sägekette mit Spitzzähnen.
Fig. 5 zeigt die Spitzzahnsägekette aus Fig.4 in einer Seitenansicht.
Fig. 6 zeigt einen als Spitzzahn ausgeformte Schneider einer erfindungsgemäßen Sägekette in einer Seitenansicht, Fig. 7 zeigt ihn in einher Ansicht von oben und Fig. 8 zeigt ihn in einer Ansicht von vorne.
Die Figuren 9 bis 11 zeigen Varianten des Spitzzahnes in einer Ansicht von vorne.
Die Figuren 12 bis 14 zeigen verschiedene Varianten des Aufbaus des Hobelzahnes einer erfindungsgemäßen Sägekette.
In Fig. 15 ist eine Führungsschiene für die erfindungsgemäße Trennvorrichtung dargestellt.
Figur 16 zeigt schematisch eine erfindungsgemäße Trennvorrichtung bei ihrer Verwendung in einer Extrusionslinie für ein Kunststoffprodukt.

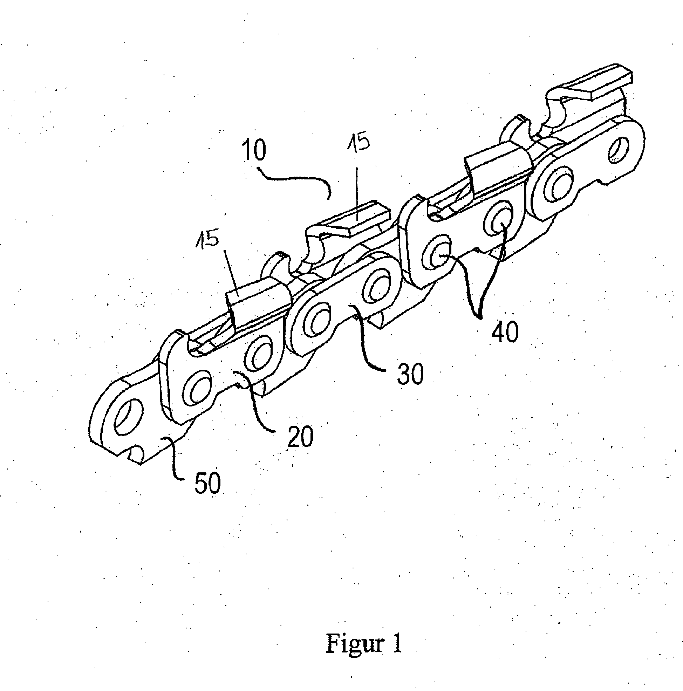

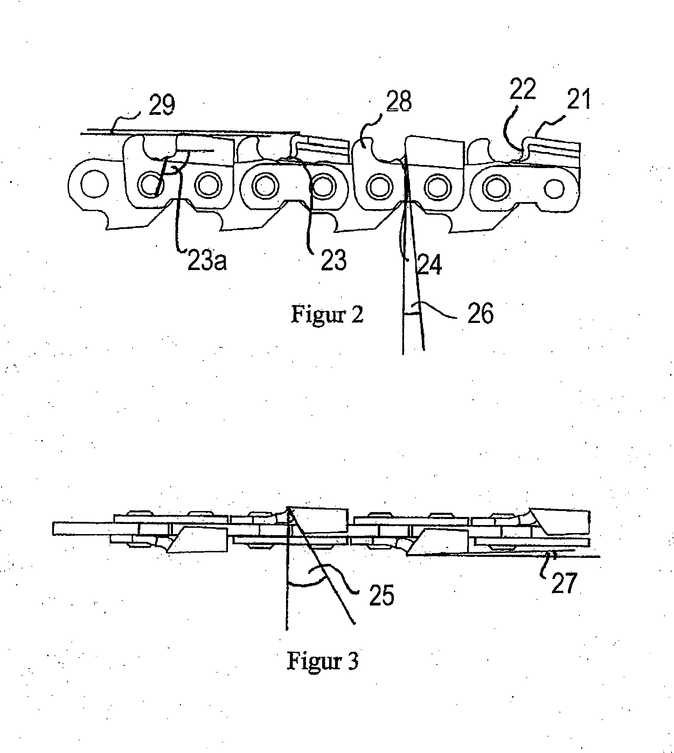

Die Figuren 1 bis 14 sind Prinzipskizzen von erfindungsgemäßen Sägeketten und deren Teilen und dienen der besseren Verständlichkeit der Beschreibung, sind jedoch nicht maßstäblich dargestellt.

Eine Sägekette 10 besteht aus Mittelverbindern 50, die in Eingriff mit der nicht dargestellten Führungsschiene und dem Antriebsrad stehen und über Nieten 40 mit dem Schneider 20 und auf der dem Schneider 20 gegenüberliegenden Position dem Rundverbinder 30 gelenkig verbunden sind, wie in Figuren 1 bis 5 dargestellt.

Eine wesentliche Aufgabe beim Trennen kommt dem Schneider 20 zu, der das Material abtragen muss. Hier hat sich gezeigt, dass bei Kunststoffen eine kleine Spanbildung erforderlich ist und sich der Span möglichst stark einrollen muss. Dadurch wird gewährleistet, dass beim Schnittvorgang wenig Wärme entsteht und durch das Einrollen und saubere Trennen des Spans die Wärme rasch abgeführt werden kann. Somit geht der Schnittspan keine Verbindung mit dem zu trennenden Kunststoffprodukt und auch nicht mit der Trennvorrichtung ein, sodass er bei Verlassen der Trennfläche durch die Schwerkraft leicht herausfallen und abtransportiert werden kann.

In den Figuren 1 bis 3 entspricht der Schneider 20 in seiner Grundgeometrie einem sogenannten Hobelzahn. Bei diesem Hobelzahn ist es jedoch notwendig, dass der Schärfwinkel oder Schneidwinkel 25 des Schneidelements 15 gegenüber üblichen 30 bis 40° sehr stark reduziert wird. Für eine gewünschte Spanbildung in Kunststoff ist es notwendig diesen Winkel 25 auf 5 bis 20°, bevorzugterweise auf 12 bis 18° zu reduzieren. Der kurze Span ergibt sich, da die Hauptschneide 21 durch den flacheren Schneidwinkel 25 weniger Material abträgt.

Der Brustwinkel 26 sowohl der Hauptschneide 21, wie auch der Nebenschneide 22 beträgt ebenfalls 12 bis 18° und läuft unten in einem Radius 23 aus. Dieser Radius 23 am Zahngrund beträgt zwischen 3 und 4 mm. Dieser Radius 23 ist ebenso wie die seitliche Nebenschneide 22 mit einer Schneide zu versehen, dass der Span vollständig geschnitten wird, da dieser bei den elastischen Kunststoffen gegenüber dem spröderen Holz nicht bricht.

Die Höhendifferenz 29 zwischen Räumer 28 und der Hauptschneide 21 am Schneider 20 beträgt zwischen 0,5 und 1,1 mm und ist für die Schnitttiefe, damit auch wieder für die Spangröße verantwortlich.

Die Nebenschneide 22 wird vorteilhafterweise mit einem seitlichen Freiwinkel 27 zwischen 1 und 6°, bevorzugter 2 und 5°, insbesondere 3° ausgeführt und ist dafür verantwortlich, dass eventuell verdrücktes Material, welches zurückfedert nicht auf den Schneider 20 drückt und der Vortrieb zum Stillstand kommt.

Durch den flacheren Schneidwinkel 25 ergibt sich ein kurzer, halbmondförmiger Span welcher sich durch die raschere Abkühlung gegenüber einem langen eingedrehten Span positiv für eine geringe Temperaturerhöhung auswirkt. Durch die geringere Menge an abgetragenem Material je Schneider 20 ist auch die Temperaturentwicklung am Schneider 20 selbst geringer.

Weiters ist dadurch ein geringeres seitliches Verziehen des Schneiders 20 zu erwarten, da die Hauptschneide 21 weniger aggressiv Material abträgt.

Ebenso ist die Nebenschneide 22 möglichst tief in den Schneidengrund geführt und der gesamte Radius 23 ist als Schnittkante ausgeführt. Besonders vorteilhaft ist es, wenn sich der Radius 23 mehr als 90°, bevorzugt 95 bis 140° als Umschlingungswinkel 23a erstreckt und so eine Schneidenenderhebung 24 zwischen den Schneiden 21, 22 und dem Räumer 28 erzeugt. Diese Schneidenenderhebung 24 führt dazu, dass der Span eingerollt und sicher abgetrennt wird, was beim Trennen von Kunststoffen von großem Vorteil ist.

Durch die Kleinheit des so gebildeten Spans hat sich gezeigt, dass der Zwischenraum zwischen den einzelnen Schneidern 20, der heute meist ein Leerglied aus zwei Rundverbindern 30 aufweist nicht notwendig ist.

Bei der erfindungsgemäßen Ausgestaltung ist es möglich, jedes Kettenglied der Sägekette 10 mit einem Schneider 20 auszustatten und die aus der Holzbearbeitung üblichen Zwischenräume zu eliminieren.

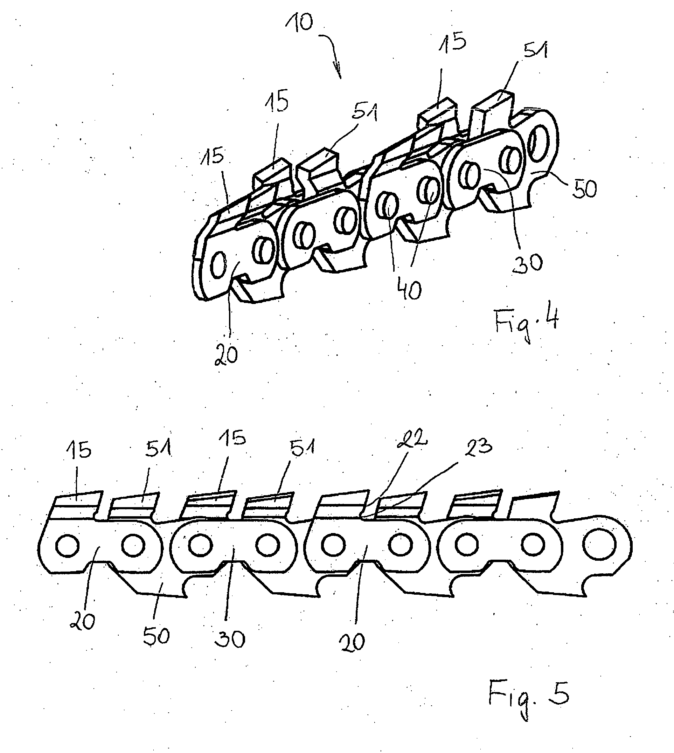

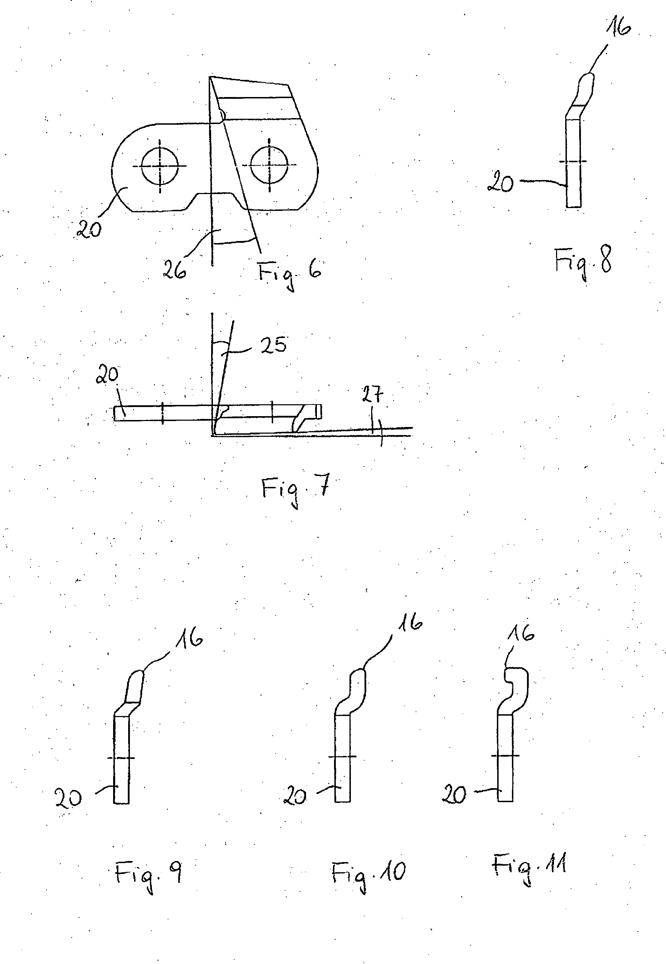

Statt mit Hobelzähnen kann die erfindungsgemäße Sägekette, wie in den Figuren 4 bis 11 gezeigt auch mit Spitzzähnen mit entsprechenden Geometrien mit den gleichen Werten für den Schneidwinkel 25 und den Brustwinkel 26 und den gleichen Maßen für den Übergang von der Nebenschneide 22 in den Schneidengrund versehen sein. Damit ergibt sich wieder der beim Schneiden von Kunststoff bevorzugte kurze eingerollte Span. Wie man in den Figuren 8 bis 11 gut erkennt, ist vorzugsweise bei Spitzzähnen die parallel zur Laufrichtung der Sägekette verlaufende Längskante 16 des Zahndachs abgerundet und verglichen mit bekannten Spitzzähnen ist die seitliche Kröpfung gering. Durch die Abrundung der Längskante 16, sowie auch die geringe Kröpfung, ergibt sich auf den Schnittflächen eine Oberfläche, die einer geschlichteten Oberfläche entspricht, wodurch eine Nachbearbeitung der Schnittflächen entfallen kann. Wie bei Spitzzahnsägeketten üblich tragen die Mittelverbinder 50 unterschiedlich ausgeformte Zapfenzähne 51, die Späne abhobeln, abtransportieren und den Schnitt stabilisieren.

Um das Hängenbleiben der Sägekette, insbesondere auch des rücklaufenden Teils der Kette an den Schnittflächen des geschnittenen Kunststoffprodukts, die nach dem Schnitt aufgrund elastischer und plastischer Verformung dazu tendieren, wieder "zusammenzuwachsen", zu verhindern, ist vorzugsweise die Schneide 20 im nachlaufenden Endbereich freigestellt.

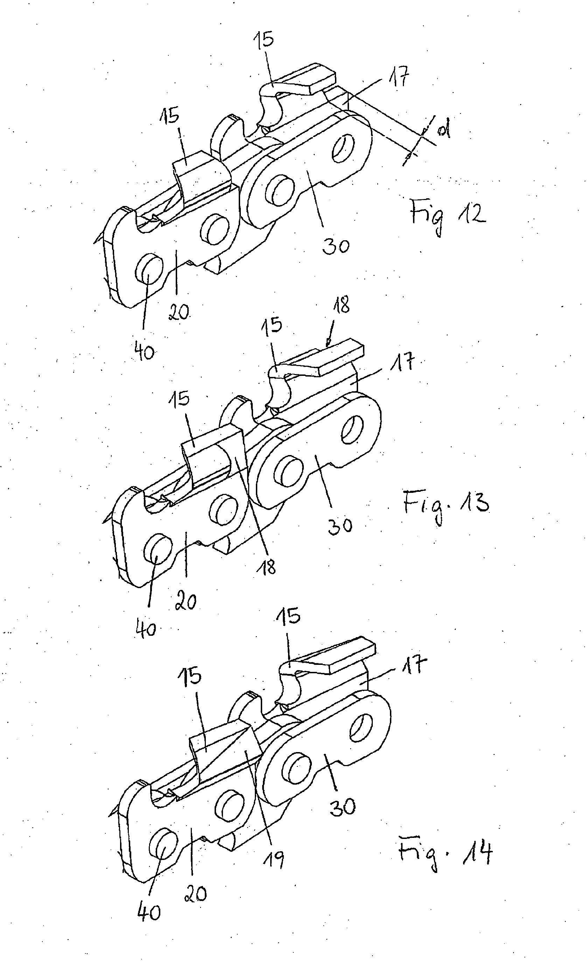

Die Figuren 12 bis 14 zeigen drei Varianten einer solchen Freistellung.

In Fig. 12 endet das Schneidelement 15 vor dem Ende des Schneidengrunds 17, wobei der Abstand d zwischen dem Ende des Schneidelements 15 und dem Ende des Schneidengrunds 17 ca. 30 % der Länge des Schneidelements beträgt. Dieser Abstand kann erfindungsgemäß zwischen 25 und 100% der Länge des Schneidelements betragen.

In der in Fig. 13 gezeigten Alternative weist das Schneidelement 15 in seinem nachlaufenden Endbereich eine Vertiefung 18 auf, wobei die Länge dieses Endbereichs ca. 35% der Länge des Schneidelements 15 ist. Die Länge der Vertiefung 18 bzw. des Endbereichs kann erfindungsgemäß 20 bis 50% der Länge des Schneidelements betragen.

Schließlich wird in der Alternative der Fig. 14 die Freistellung dadurch erreicht, dass sich an der äußeren Seitenfläche des Schneidelements 15 eine ebene Fläche 19 befindet, die sich von der nachlaufenden Kante des Schneidelement 15 zur Nebenschneide 22 hin erstreckt und mit der Laufrichtung der Sägekette 10 einen Freiwinkel 27 von 1 bis 6°, vorzugsweise 2 bis 5°, insbesondere 3°einschließt.

Vorteilhafterweise werden die Schneider 20 abwechselnd als linke und rechte Schneider 20 angeordnet, wie auch in den Figuren ersichtlich.

Weiters ist durch die Mehranzahl an Schneidern 20 auch mit geringerer Abtragsleistung eines einzelnen Schneiders 20 eine gute Schnittleistung möglich, da jeweils mehrere Schneider 20 gleichzeitig in der Trennfläche im Eingriff stehen und keine Leerglieder vorhanden sind.

Eine abwechselnde Anordnung linker und rechter Schneider 20 bei einer vollbesetzten Kette 10 führt zu einer geringeren Verzugsneigung der Kette 10 im Betrieb, da sich entstehende Seitenkräfte beim Schneiden besser aufheben als beim Vorhandensein von Leergliedern. Damit wird ein gerader Schnitt erzeugt, der keine oder nur sehr geringe Nacharbeit benötigt.

Mit der so erzeugten geraden Schnittfläche, an der auch keine Fäden anhaften, ist es möglich zwei getrennte Rohre entweder ohne weitere Nacharbeit, oder mit wesentlich geringerer manueller Nacharbeit mittels Schweißvorgang miteinander zu verbinden. Ebenso ist es beim Trennen von Vollstäben wichtig, dass keine Fäden anhaften, da diese vor einem Verkauf der abgelängten Produkte entfernt werden müssten. Ein sauberer Schnitt ist auch beim Trennen eines Plattenstapels oder anderer Kunststoffprodukte von Vorteil.

Der gesamte Schneider 20 kann einstückig ausgeführt sein. Es ist aber selbstverständlich auch möglich, den Schneidbereich ganz oder teilweise mittels eines Hartstoffeinsatzes, der formschlüssig befestigt oder aufgelötet ist auszuführen. Als Hartstoff kann dabei z.B. polykristalliner Diamant oder Hartmetall verwendet werden.

Weiters ist es möglich den Schneider 20 teilweise oder ganz zu beschichten. Dazu eignen sich galvanische Beschichtungen oder auch solche, die mittels pvd- oder cvd-Verfahren aufgetragen werden. Hartstoffbeschichtungen, wie Diamantbeschichtungen oder Beschichtungen mit einer Titanverbindung, sowie Beschichtungen die unter dem Handelsname Balinit® in zahlreichen Ausführungsformen vertrieben werden, können aufgebracht sein. Neben dem Schneider 20 können auch die anderen Bestandteile der Sägekette 10 beschichtet werden.

Durch die geringe Temperaturentwicklung im kurzen Span und durch die hohe Schnittgeschwindigkeit, damit kurze Verweilzeit des Schneiders 20 im Trennspalt und entsprechende Kühlung durch Umgebungsluft außerhalb, ist auch keine zusätzliche Kühlung notwendig, was sich vorteilhaft in der Weiterverarbeitung der getrennten Produkte auswirkt. Bei der Verwendung von Kühlmitteln haften immer Kühlmittelreste an der Schnittfläche und in benachbarten Bereichen an, was optisch unschön ist und bei der Weiterverarbeitung, zum Beispiel dem Verschweißen einen technischen Nachteil darstellt.

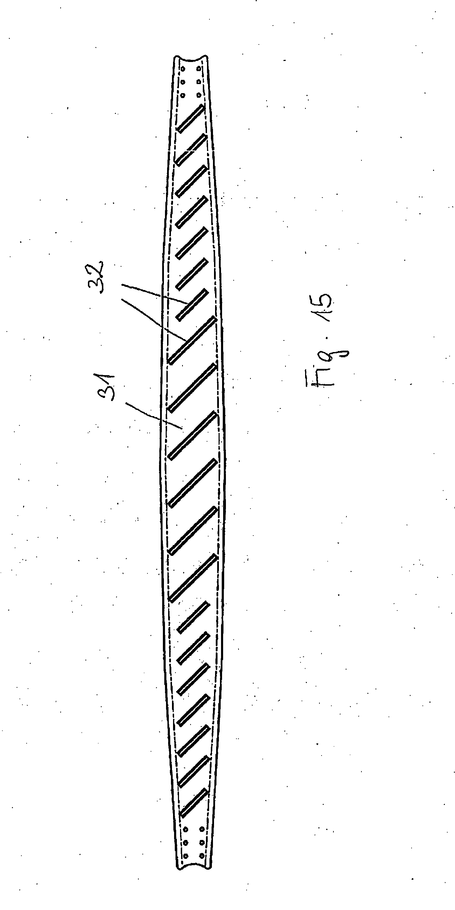

Ebenso hat sich als vorteilhaft herausgestellt, die Führungsschiene 31, auf der die Sägekette 10 durch die Mittelverbinder 50 geführt wird, zusätzlich mit seitlich vorstehenden Gleitelementen 32 auszustatten. Ein solche Führungsschiene ist in Fig. 15 gezeigt.

Die Führungsschiene 31 muss entsprechend schmäler als der Abstand der beiden äußeren Nebenschneiden 22 des Schneiders 20 gewählt werden, damit es zu keinem Verklemmen der Führungsschiene 31 im Schnittspalt kommt. Dies würde wiederum die Temperaturentwicklung negativ beeinflussen und weiters die Schnittleistung drastisch reduzieren. Somit steht die Führungsschiene 31 nur zur Führung der Kette 10 zur Verfügung, kann aber den angesprochenen Verzug durch das Verziehen der Kette 10 oder durch ein eventuelles Aufschwingen des Trennsystems insgesamt nur bedingt vermeiden.

Um hierfür auch eine exakte Führung im Sägespalt zu erzielen ist vorgesehen, die Führungsschiene 31 seitlich mit Gleitelementen 32 zu versehen, die über die Breite der Führungsschiene 31 bis annähernd auf die Schnittbreite herausragen und somit die Sägekette 10 durch die Führungsschiene 31 auch im Sägespalt geführt wird.

Eine entsprechende Führung der Trenneinrichtung ist vor allem bei Trenneinrichtungen für große Produkte oder Produktstapel von Vorteil, da mit der Länge der Führungsschiene 31 und damit auch der Kette 10 die Eigenstabilität des Systems abnimmt. Es ist möglich die Führungsschiene mit einer Länge bis zu 3500 mm und damit die Kette 10 mit ca. 7000 mm zu fertigen.

Diese Gleitelemente 32 werden bevorzugt aus Kunststoffen mit besonders guten Gleiteigenschaften auf anderen Kunststoffen, insbesondere auf Polyolefinen gewählt. Kunststoffe, die hierfür bevorzugt eingesetzt werden, sind PTFE, POM, PUR oder Polyamide, welches auch entsprechend modifiziert sein können.

Es ist auch möglich Metalle, bzw. Metalllegierungen mit geringem Reibkoeffizienten oder einer reibungsmindernden Beschichtung zu verwenden.

Die Gleitelemente weisen bevorzugt eine elliptische, bzw. ovale Kontur auf, dass zumindest zwei dieser Gleitführungen bei möglichst geringer Querschnittsfläche in die Schnittfläche eingreifen und die Führungsschiene stabilisieren.

Der Querschnitt kann aber auch rund, dreieckig, rechteckig oder jede beliebige runde, wie auch eckige Geometrie und Mischformen daraus annehmen.

Die Gleitelemente sind typischerweise seitlich auf die Führungsschiene links und rechts befestigt, wobei dies bevorzugt mittels einer Verklebung erfolgt. Dazu kann zur einfacheren Befestigung, wie auch zum besseren Halt der Gleitelemente die Führungsschiene mit leichten Vertiefungen ausgeführt sein, in die die Gleitelemente eingeklebt werden.

Es ist aber auch möglich, die Führungsschiene mit Durchbrüchen zu versehen und hier die Gleitelemente mit einer Presspassung durchzuführen. Auch hier kann zusätzlich eine Verklebung stattfinden.

Sind die Gleitelemente aus Metall, kann neben dem Kleben auch das Löten als Verbindungstechnik angewandt werden.

Neben der Ausführung der Sägekette 10 ist auch die Verwendung einer derartigen Kette 10 und einer Führungsschiene 31 zum Trennen von Kunststoffprodukten neu.

Die Kunststoffprodukte sind insbesondere Rohre, Profile und Vollstäbe mit einem Durchmesser größer 300 mm, bevorzugt größer 1000 mm nochmals bevorzugter mit einem Durchmesser größer 1400 mm. Das Material dieser Kunststoffprodukte sind bevorzugt Polyolefine, insbesondere.Polyethylen hoher Dichte (HDPE) oder Polypropylen (PP), kann aber auch jeder andere Kunststoff sein.

Nachfolgend ist von Produkten die Rede, wobei neben Rohren, Profilen und Vollstäben auch weitere Kunststoffprodukte, wie beispielsweise Platten oder gewickelte Kunststoffprodukte (meist Folien) damit sinngemäß umfasst sind.

Diese Produkte müssen einerseits direkt bei der Herstellung auf transportierbare Längen abgelängt werden, andererseits kann auch zu einem späteren Zeitpunkt ein Schneiden des Produktes notwendig sein. Beim Trennen direkt nach der Herstellung befindet sich die Trennvorrichtung am Ende einer Extrusionslinie, auf der diese Produkte meist hergestellt werden.

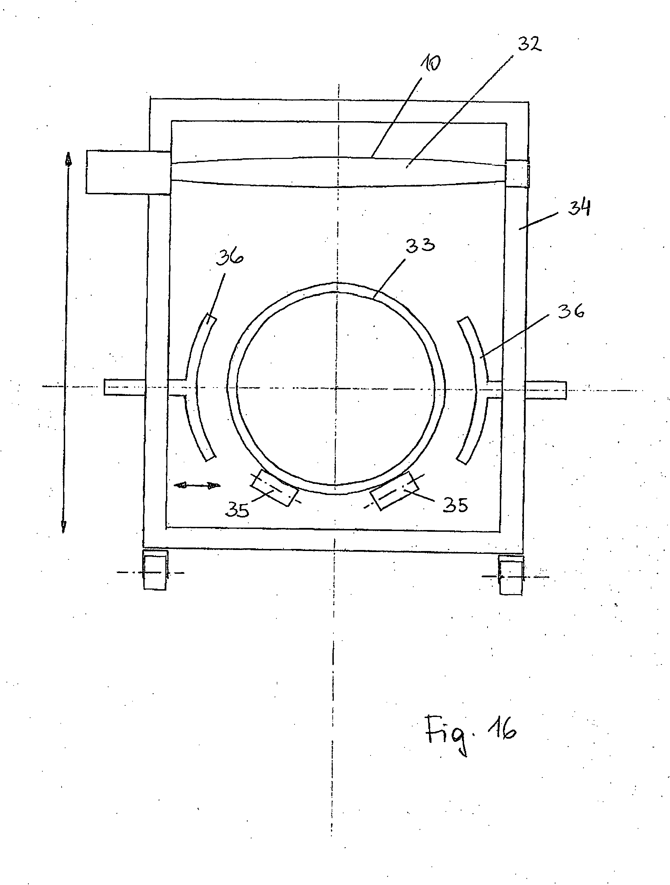

In Fig. 16 ist beispielhaft schematisch eine erfindungsgemäße Trennvorrichtung in einer Endstation einer Extrusionsline dargestellt. Ein Extrudat oder Extrusionsprodukt, wie z.B. ein Kunststoffrohr 33 wird von einer vorangegangenen Station einer Extrusionslinie mit Extrusionsgeschwindigkeit durch einen Rahmen 34 geschoben und stützt sich dabei auf Walzenlagern 35 ab. Nach Durchlauf einer vorbestimmten Länge des Kunststoffrohrs 34 wird eine Klemmvorrichtung 36 geschlossen und das Kunststoffrohr 33 gegenüber dem Rahmen 34 fixiert, der sich nun mit einer gegenüber der Extrusionsgeschwindigkeit synchronisierten Geschwindigkeit mit dem Kunststoffrohr 33 (hier horizontal) mitbewegt. Gleichzeitig wird die am Rahmen 34 montierte erfindungsgemäße Trennvorrichtung mit der erfindungsgemäßen Sägekette 10 im Rahmen 34 verfahren (hier vertikal) und führt so den Schnitt durch das Kunststoffrohr 33 aus. Danach wird die Trennvorrichtung wieder in ihre Position oben am Rahmen 34 gebrächt, die Klemmvorrichtung 36 wieder geöffnet und der Rahmen 34 kehrt mit der Trennvorrichtung wieder in die Ausgangsstellung zurück, wobei sich eine weitere Länge des Extrusionsprodukt, d.h. des Kunststoffrohrs durch den Rahmen schiebt. Das abgeschnittene Rohrstück kann entfernt werden und die Ablängung des nächsten Rohrstücks kann beginnen.

Die Fixierung des Extrusionsprodukts kann auch durch andere Fixiereinrichtungen als eine Klemmvorrichtung erfolgen. Alternativ kann eine Fixierung des Extrusionsprodukts während des Schneidens auch unterbleiben und das Extrusionsprodukt wird freistehend bei synchronisierter Bewegung der Trennvorrichtung getrennt.

Weiters ist es notwendig Produkte auch direkt auf der Baustelle oder in anderen Fertigungshallen, bzw. bei Konfektionierungsplätzen zu trennen.

Dies insbesondere bei Abzweigungen, bzw. Abwinkelungen, wo die Produkte eventuell auch auf Gehrung geschnitten werden müssen.

Einerseits können die beschriebenen Produkte einzeln getrennt werden

Andererseits ist es aber bei kleineren Produkten und Platten oftmals notwendig mehrere Produkte auf die gleiche Länge abzulängen. Auch hier kann vorteilhafterweise mit der erfindungsgemäßen Trennvorrichtung ein gesamter Produktstapel getrennt werden. Dieser Stapel kann aus übereinanderliegenden Platten, aus mehreren Rohren, Vollstäben oder Profilen, oder auch aus aufgewickelten Folien bestehen und ergibt durch den Stapel, bzw. den Folienwickel wiederum einen entsprechend großen zu durchtrennenden Durchmesser über 300 mm.

Nach dem Schneiden der Produkte werden diese typischerweise, beispielsweise dann, wenn es sich um Rohre oder Profile handelt miteinander verschweißt. Dazu ist es notwendig einen planen Schnitt über den gesamten Umfang des Rohres zu haben, dass zwei Trennflächen möglichst plan aufeinander aufliegen.

Falls dies nicht möglich ist, wäre eine aufwendige Nacharbeit mit handgeführten Werkzeugen notwendig, was mit hohen Kosten verbunden ist.

Durch die saubere Trennung mit der erfindungsgemäßen Trennvorrichtung ist es möglich die plane Schnittfläche mit einem Trennvorgang herzustellen, der wenn überhaupt nur noch eine geringe Nacharbeit erforderlich macht.

Durch den einerseits planen, andererseits sauberen Schnitt ohne Fäden und Verschweißungen ist eine wesentlich geringere oder gar keine Nacharbeit an der Schnittfläche notwendig.

Ein weiterer Vorteil für die spätere Nacharbeit ist, dass der Schnitt mit der Trennvorrichtung ohne Kühl- und Schmiermittel erfolgen kann. Somit ist auch keine Reinigung oder Vorbehandlung der Schnittfläche vor der Weiterverarbeitung, beispielsweise dem Verschweißen notwendig.

Neben dem Trennen des Produkts in der Linie, zur nachfolgenden Konfektionierung der Produkte, wie auch auf der Baustelle, ist es ebenso möglich Ausschuss-, Anfahr-, oder Abfallstücke von großen Extrusionsprodukten, oder einem bereits beschriebenen Stapel oder Wickel von an sich kleineren Kunststoffprodukten zu zerkleinern und somit einem werkstofflichen Recycling auf handelsüblichen Mühlen zuführen zu können.

Somit konnte eine Sägekette und eine Trennvorrichtung für Kunststoffe geschaffen werden, welche saubere Schnitte ohne Kühlmittel erzeugt. Diese Sägekette und die Trennvorrichtung , sowie bevorzugte Verwendungen sind in den angeschlossenen Ansprüchen beschrieben.

## Patentansprüche

1. Sägekette (10) für eine Trennvorrichtung zum Trennen von Kunststoffprodukten mit bevorzugt als Hobelzahn oder Spitzzahn ausgebildeten Schneidern (20), die jeweils einen Schneidengrund aufweisen, der an seinem nachlaufenden Endbereich ein Schneidelement trägt, **dadurch gekennzeichnet, dass** sowohl der Schneidwinkel (25), als auch der Brustwinkel (26) jeweils zwischen 5 und 20°, bevorzugt zwischen 12 und 18° liegen, besonders bevorzugt beide 15° betragen, und die Nebenschneide (22) mit einem Radius (23) von 3 bis 4 mm bis in den Schneidengrund geführt ist.

2. Sägekette nach Anspruch 1, **dadurch gekennzeichnet, dass** die Nebenschneide (22) im Schneidengrund mit einem Radius (23), der zumindest 95 bis 140° Umschlingungswinkel (23a) aufweist, ausläuft und dabei am Schneider (20) eine Schneidenenderhebung (24) bildet.

3. Sägekette nach mindestens einem der Ansprüche 1 oder 2, **dadurch gekennzeichnet, dass** der Schneider (20) einen seitlichen Freiwinkel (27) von 1 bis 6°, vorzugsweise 2 bis 5°, insbesondere 3° hat.

4. Sägekette nach einem der Ansprüche 1 bis 3, **dadurch gekennzeichnet, dass** das Schneidelement in einem Bereich von mindestens 20% bis vorzugsweise höchstens 50% der Länge des Schneidenelements vom nachlaufenden Ende des Schneidengrundes aus eine Vertiefung aufweist.

5. Sägekette nach einem der Ansprüche 1 bis 3, **dadurch gekennzeichnet, dass** das nachlaufende Ende des Schneidelements in einem Abstand von mindestens 25% bis vorzugsweise höchstens 100% der Länge des Schneidelements vom nachlaufenden Ende des Schneidengrunds liegt.

6. Sägekette nach einem der Ansprüche 1 bis 3, **dadurch gekennzeichnet, dass** sich an der äußeren Seitenfläche des Schneidelements eine ebene Fläche befindet, die sich von der nachlaufenden Kante des Schneidelement zur Nebenschneide hin erstreckt und mit der Laufrichtung der Sägekette (10) den Freiwinkel (27) einschließt.

7. Sägekette nach einem der vorherigen Ansprüche, **dadurch gekennzeichnet, dass** der Schneider als Spitzzahn ausgebildet ist und die parallel zur Laufrichtung der Sägekette verlaufende Längskante des Zahndaches des Spitzzahns abgerundet ist.

8. Sägekette nach einem der vorhergehenden Ansprüche, **dadurch gekennzeichnet, dass** die Sägekette (10) durchgehend mit einem abwechselnd linken und rechten Schneider (20) ausgerüstet ist.

9. Sägekette nach einem der vorhergehenden Ansprüche, **dadurch gekennzeichnet, dass** der Schneider (20) der Sägekette (10) ganz oder teilweise oberflächenbeschichtet ist und insbesondere eine vollflächige galvanische Verchromung aufweist und/oder die Hauptschneide (21) und/oder die Nebenschneide (22) zumindest teilweise mit einer Hartstoffbeschichtung, wie einer Diamant-, Titan- oder anderen Hartstoffbeschichtung oder einem aufgelöteten oder formschlüssig eingesetzten Einsatz aus einem Hartstoff, wie polykristallinem Diamant, Hartmetall oder einem anderen Hartstoff, versehen ist bzw. sind.

10. Trennvorrichtung zum Trennen von Kunststoffprodukten mit einer auf einer Führungsschiene, geführten Sägekette (10) nach mindestens einem der Ansprüche 1 bis 9, **dadurch gekennzeichnet, dass** die Führungsschiene mit Gleitelementen ausgerüstet ist, die vorzugsweise aus Kunststoff, insbesondere aus PTFE, POM, PUR oder PA oder Mischungen daraus bestehen und vorzugsweise angeklebt sind oder aus Metall beziehungsweise Metalllegierungen bestehen und aufgeklebt oder aufgelötet sind.

11. Trennvorrichtung nach Anspruch 10, **dadurch gekennzeichnet, dass** die Führungsschiene Vertiefungen aufweist, in die die Gleitelemente eingeklebt sind.

12. Trennvorrichtung nach einem der Ansprüche 10 oder 11, **dadurch gekennzeichnet, dass** die Länge der Führungsschiene bis zu 3500 mm beträgt.

13. Verwendung der Trennvorrichtung nach mindestens einem der Ansprüche 10 bis 12 zur Trennung von insbesondere aus Polyolefinen wie HDPE oder PP hergestellten Kunststoffprodukten, wie Rohren, Profilen oder Vollstäben mit einem Durchmesser von größer 300 mm oder zur gemeinsamen Trennung mehrerer insbesondere aus Polyolefinen wie HDPE oder PP hergestellten Kunststoffprodukte, wie einem Stapel aus Platten, einem Paket aus Rohren, Profilen oder Vollstäben, wie auch einer gewickelten Folie mit einem Gesamtdurchmesser von größer 300 mm.

14. Verwendung der Trennvorrichtung nach mindestens einem der Ansprüche 10 bis 12 zur Trennung eines oder mehrerer insbesondere aus Polyolefinen wie HDPE oder PP hergestellten Kunststoffprodukte in einer Extrusionslinie oder bei einem Konfektionierungsarbeitsplatz oder auf einer Baustelle, wobei vorzugsweise die Trennvorrichtung während des Trennvorgangs in einer synchronisierten Bewegung mit der gleichen Geschwindigkeit und in die gleiche Richtung bewegt wird wie das Extrusionsprodukt, wobei die Trennvorrichtung während des Trennvorgangs am Extrusionsprodukt befestigt, insbesondere festgeklemmt ist oder freistehend die synchronisierte Bewegung mitmacht.

15. Verwendung nach Anspruch 14, **dadurch gekennzeichnet, dass** beim Trennvorgang nach Durchgang der Trennvorrichtung in die Schnittstelle in dem Kunststoffprodukt ein Spaltkeil eingebracht wird.

16. Verwendung der Trennvorrichtung nach mindestens einem der Ansprüche 10 bis 12 zum Zerkleinern von Anfahr- bzw. Ausschussstücken in mühlengerechte Stücke.

## Claims

1. A saw chain (10) for a cutting device for cutting plastic products, comprising cutters (20) which preferably are formed as a chipper tooth or scratcher tooth and each of which has a cutting edge gullet that carries a cutting element at its trailing end, **characterized in that** both the cutting angle (25) and the breast angle (26) range between 5 and 20°, preferably between 12 and 18°, more preferably are both 15°, and the secondary cutting edge (22) is guided into the cutting edge gullet with a radius (23) of 3 to 4 mm.

2. The saw chain according to claim 1, **characterized in that** the secondary cutting edge (22) ends in the cutting edge gullet with a radius (23) that has a wrap angle (23a) of at least 95 to 140° and thereby forms a cutting edge end elevation (24) on the cutter (20).

3. The saw chain according to at least one of claims 1 or 2, **characterized in that** the cutter (20) has a lateral clearance angle (27) of 1 to 6°, preferably 2 to 5°, and in particular 3°.

4. The saw chain according to any one of claims 1 to 3, **characterized in that** the cutting element, in a region of at least 20 % to preferably not more than 50 % of the length of the cutting element, has a recess that extends from the trailing end of the cutting edge gullet.

5. The saw chain according to any one of claims 1 to 3, **characterized in that** the trailing end of the cutting element is spaced from the trailing end of the cutting edge gullet at a distance of at least 25 % to preferably not more than 100 % of the length of the cutting element.

6. The saw chain according to any one of claims 1 to 3, **characterized in that** at the outer lateral surface of the cutting element there is a flat surface that extends from the trailing edge of the cutting element to the secondary cutting edge and together with the running direction of the saw chain (10) encloses the clearance angle (27).

7. The saw chain according to any one of the preceding claims, **characterized in that** the cutter is formed as a scratcher tooth, and the longitudinal edge of the tooth top plate of the scratcher tooth is rounded, said longitudinal edge extending parallel to the running direction of the saw chain.

8. The saw chain according to any one of the preceding claims, **characterized in that** the saw chain (10) is continuously provided with alternating left and right cutters (20).

9. The saw chain according to any one of the preceding claims, **characterized in that** the cutter (20) of the saw chain (10) is fully or partially surface-coated and has in particular a full-surface galvanic chromium plating, and/or the main cutting edge (21) and/or the secondary cutting edge (22) are/is provided at least partially with a hard coating such as a diamond-, titanium- or other hard-coating, or with a soldered or positively fitting insert made of hard material such as polycrystalline diamond, hard metal or another hard material.

10. A cutting device for cutting plastic products, comprising a saw chain (10) guided on a guide rail according to at least one of claims 1 to 9, **characterized in that** the guide rail is provided with sliding elements that are preferably composed of plastics, in particular of PTFE, POM, PUR or PA or mixtures thereof and are preferably glued in place, or are composed of metal or metal alloys and are glued or soldered in place.

11. The cutting device according to claim 10, **characterized in that** the guide rail has recesses in which the sliding elements are glued in place.

12. The cutting device according to any one of claims 10 to 11, **characterized in that** the length of the guide rail is up to 3500 mm.

13. Use of the cutting device according to at least one of claims 10 to 12 for cutting plastic products such as pipes, profiled elements or solid bars that are in particular made from polyolefins such as HDPE or PP and have a diameter of greater than 300 mm, or for jointly cutting a plurality of plastic products such as a stack of plates or a bundle of pipes, profiled elements or solid bars and also a wound foil that are in particular made from polyolefins as HDPE or PP and have a total diameter of greater than 300 mm.

14. The use of the cutting device according to at least one of claims 10 to 12 for cutting, in an extrusion line or at a finishing workplace or on a construction site, one or more plastic products in particular made from polyolefins such as HDPE or PP, wherein preferably during the cutting process, the cutting device is moved in a synchronized movement at the same speed and in the same direction as the extruded product, wherein during the cutting process, the cutting device is fastened, in particular fixedly clamped, to the extruded product or follows the synchronized movement in a detached manner.

15. The use according to claim 14, **characterized in that** during the cutting process and after the passage of the cutting device, a splitting wedge is inserted into the cut surface in the plastic product.

16. The use of the cutting device according to at least one of claims 10 to 12 for crushing start-up parts or scrap parts into pieces suitable for a grinder.

## Revendications

1. Chaîne à scier (10) pour un dispositif de séparation destiné à séparer des produits plastique comprenant des trancheurs (20) formés de préférence en tant que dents de forme rabot ou dent pointue, qui présentent chacun une base de coupe qui porte un élément de coupe sur son extrémité de poursuite, **caractérisée en ce que** tant l'angle de coupe (25) que l'angle d'attaque (26) font respectivement entre 5 et 20°, de préférence entre 12 et 18°, particulièrement de préférence tous les deux 15°, et la lame secondaire (22) est dirigée avec un rayon (23) de 3 à 4 mm jusque dans la base de coupe.

2. Chaîne à scier selon la revendication 1, **caractérisée en ce que** la lame secondaire (22) s'arrête dans la base de coupe avec un rayon (23) qui a un angle d'enlacement (23a) d'au moins 95 à 140°, et forme ainsi un bossage de coupe (24) sur le trancheur (20).

3. Chaîne à scier selon au moins la revendication 1 ou 2, **caractérisée en ce que** le trancheur (20) présente un angle de dépouille latéral (27) de 1 à 6°, de préférence de 2 à 5°, en particulier de 3°.

4. Chaîne à scier selon l'une des revendications 1 à 3, **caractérisée en ce que** l'élément de coupe présente un creux dans une plage d'au moins 20 % jusqu'à de préférence 50 % au plus de la longueur de l'élément de coupe depuis l'extrémité de poursuite de la base de coupe.

5. Chaîne à scier selon l'une des revendications 1 à 3, **caractérisée en ce que** l'extrémité de poursuite de l'élément de coupe est à une distance d'au moins 25 % jusqu'à de préférence 100 % au plus de la longueur de l'élément de coupe de l'extrémité de poursuite de la base de coupe.

6. Chaîne à scier selon l'une des revendications 1 à 3, **caractérisée en ce qu'**une surface plane se trouve sur le côté extérieur de l'élément de coupe, qui s'étend de l'arête de poursuite de l'élément de coupe vers la lame secondaire et inclut l'angle de dépouille (27) avec le sens d'avancée de la chaîne à scier (10).

7. Chaîne à scier selon l'une des revendications précédentes, **caractérisée en ce que** le trancheur est formé en tant que dent pointue et l'arête longitudinale du toit de la dent pointue parallèle au sens d'avancée de la chaîne à scier est arrondie.

8. Chaîne à scier selon l'une des revendications précédentes, **caractérisée en ce que** la chaîne à scier (10) est dotée, de façon traversante, d'un trancheur gauche et droit alternés (20).

9. Chaîne à scier selon l'une des revendications précédentes, **caractérisée en ce que** le trancheur (20) de la chaîne à scier (10) a une surface totalement ou partiellement revêtue, et présente en particulier un chromage galvanique sur toute la surface et/ou la lame principale (21) et/ou la lame secondaire (22) est/sont dotée(s) au moins partiellement d'un revêtement de matériau dur, comme un revêtement de diamant, titane ou un autre matériau dur ou bien d'un empiècement en matériau dur, comme du diamant polycristallin, un métal dur ou un autre matériau dur, brasé ou inséré par complémentarité de forme.

10. Dispositif de séparation destiné à séparer des produits plastique comprenant une chaîne à scier (10), selon au moins l'une des revendications 1 à 9 dirigée sur un rail de guidage, **caractérisé en ce que** le rail de guidage est doté d'éléments coulissants, qui sont de préférence en PTFE, POM, PUR ou PA ou des mélanges de ceux-ci et sont de préférence collés ou sont en métal, respectivement en alliages métalliques, et sont collés ou brasés.

11. Dispositif de séparation selon la revendication 10, **caractérisé en ce que** le rail de guidage présente des creux dans lesquels les éléments coulissants sont collés.

12. Dispositif de séparation selon la revendication 10 ou 11, **caractérisé en ce que** la longueur du rail de guidage fait jusqu'à 3500 mm.

13. Emploi du dispositif de séparation selon au moins l'une des revendications 10 à 12 pour séparer des produits plastique fabriqués en particulier à partir de polyoléfines comme du HDPE ou du PP, comme des tubes, des profilés ou des barres pleines présentant un diamètre supérieur à 300 mm ou pour la séparation commune de plusieurs produits plastique fabriqués en particulier à partir de polyoléfines comme du HDPE ou du PP, comme une pile de plaques, un paquet de tubes, de profilés ou de barres pleines, comme également un film enroulé avec un diamètre total supérieur à 300 mm.

14. Emploi du dispositif de séparation selon au moins une des revendications 10 à 12 pour séparer un ou plusieurs produits plastique fabriqués en particulier à partir de polyoléfines comme du HDPE ou du PP dans une ligne d'extrusion ou dans un lieu de travail de confection ou sur un chantier, sachant que de préférence le dispositif de séparation est déplacé, pendant la séparation, dans un mouvement synchronisé à la même vitesse et dans le même sens que le produit extrudé, sachant que le dispositif de séparation est fixé, en particulier bloqué sur le produit extrudé ou effectue conjointement le mouvement synchronisé de façon libre pendant la séparation.

15. Emploi selon la revendication 14, **caractérisé en ce que** lors de la séparation, un coin à refendre est inséré dans la position de coup dans le produit plastique après le passage du dispositif de séparation.

16. Emploi du dispositif de séparation selon au moins l'une des revendications 10 à 12 pour fragmenter des pièces de démarrage, respectivement de rejet en pièces adaptées au broyeur.
